# EUROPÄISCHE PATENTSCHRIFT

(11) **EP 3 641 907 B1**
(45) Veröffentlichungstag und Bekanntmachung des Hinweises auf die Patenterteilung: **11.08.2021**
(21) Anmeldenummer: 18733546.8
(22) Anmeldetag: 15.06.2018
(51) Int. Cl.: B01D 35/18, B01D 35/30

(54) **FILTEREINRICHTUNG MIT EINEM HEIZMODUL**
FILTER DEVICE COMPRISING A HEATING MODULE
DISPOSITIF FILTRANT DOTÉ D'UN MODULE DE CHAUFFAGE

(30) Priorität: 21.06.2017 DE 102017005796
(43) Veröffentlichungstag der Anmeldung: 29.04.2020
(73) Patentinhaber: MANN+HUMMEL GmbH, 71636 Ludwigsburg (DE)
(72) Erfinder: ROLLE, Arndt-Udo, 70193 Stuttgart (DE); EGGER, Pascal, 73635 Rudersberg (DE); PFLÜGER, Frank, 74343 Sachsenheim (DE); OPRISCH, Christine, 71739 Oberriexingen (DE)
(74) Vertreter: Mann + Hummel Intellectual Property
(86) Internationale Anmeldenummer: PCT/EP2018/065933
(87) Internationale Veröffentlichungsnummer: WO 2018/234173

(56) Entgegenhaltungen:
- EP-A1- 2 514 958
- EP-A2- 1 505 292
- EP-A2- 2 110 539
- EP-A2- 2 857 669

## Beschreibung

### Technisches Gebiet

Die Erfindung bezieht sich auf eine Filtereinrichtung, insbesondere zur Kraftstofffiltration, mit einem Heizmodul nach dem Oberbegriff des Anspruches 1.

### Stand der Technik

In der EP 2 110 539 A2 wird eine Filtereinrichtung für Dieselkraftstoff mit einem Heizmodul zur Erwärmung des Dieselkraftstoffes beschrieben. Die Filtereinrichtung umfasst ein Filtergehäuse mit einem darin aufgenommenen, ringförmigen Filterelement, das radial von außen nach innen von dem Kraftstoff durchströmt wird. An der Stirnseite des zylindrischen Filtergehäuses ist ein Heizmodul befestigt, in das der ungereinigte Kraftstoff zur Erwärmung einströmt. Das Heizmodul ist mit einem Auslassstutzen versehen, der in eine korrespondierende Öffnung in der Stirnseite des Filtergehäuses hineinragt und über den der erwärmte Kraftstoff zur Rohseite des Filterelementes im Filtergehäuse strömt. Nach der Filtration wird der gereinigte Kraftstoff axial auf der dem Heizmodul gegenüberliegenden Seite aus der Filtereinrichtung abgeleitet.

Das Heizmodul ist lösbar mit dem Filtergehäuse verbunden. Die Verbindung ist als Steckverbindung ausgebildet, bei der der Abströmstutzen des Heizmoduls in die Ausnehmung im Filtergehäuse hineinragt. Die Steckverbindung ist über eine Lösesicherung gegen ein unbeabsichtigtes Lösen gesichert, wobei die Lösesicherung einen U-förmigen Federbügel umfasst, der radial eingeschoben wird und Ringrippen am Heizmodul sowie am Filtergehäuse umgreift und gegeneinander fixiert.

In der EP 2 514 958 A1 ist ein Kraftstofffilter mit einem Filtergehäuse, einem Filterelement und einem Heizmodul beschrieben, wobei das Heizmodul in einem Heizmodulgehäuse untergebracht ist, das trennbar mit dem Filtergehäuse verbunden ist.

Aus der EP 2 857 669 A2 ist eine Filtereinrichtung mit einem Filtergehäuse, welches zumindest teilweise aus einem elektrisch leitfähigen Kunststoff gebildet ist, und mit einer damit verbundenen oder verbindbaren Heizeinrichtung mit Heizelement und elektrischem Anschlusselement bekannt. Die Heizeinrichtung umfasst ein Gehäuse, welches wenigstens teilweise aus einem zweiten Gehäusematerial aus einem elektrisch leitfähigen Kunststoff gebildet ist und elektrisch leitend mit dem Filtergehäuse verbunden ist. Das elektrische Anschlusselement ist zum Ableiten von elektrischen Ladungsträgern elektrisch mit dem Filtergehäuse und dem Heizergehäuse verbunden.

### Offenbarung der Erfindung

Der Erfindung liegt die Aufgabe zugrunde, mit einfachen konstruktiven Maßnahmen eine Filtereinrichtung mit einem Heizmodul in der Weise auszubilden, dass das Heizmodul strömungsdicht und konstruktiv einfach, mittels einer stabilen und in einer Halteposition vor ungewolltem Öffnen konstruktiv einfach gesicherten Verbindung mit dem Filtergehäuse der Filtereinrichtung verbunden werden kann, wobei die Verbindung zwischen dem Heizmodul und der Filtereinrichtung gleichzeitig schnell und einfach erreicht und auch wieder gelöst werden kann, insbesondere auch ohne zusätzliche Werkzeuge zu erfordern, und damit bei günstigen Kraftverhältnissen und sicherer Verbindung zwischen dem Heizmodul und der Filtereinrichtung eine leichte Handhabung, insbesondere beim Filterelementwechsel, zu ermöglichen.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung wird insbesondere zur Flüssigkeitsfiltration eingesetzt, beispielsweise zur Kraftstofffiltration, vorzugsweise zur Filtration von Dieselkraftstoff. Die Filtereinrichtung ist mit einem Heizmodul versehen, das separat von einem Filtergehäuse der Filtereinrichtung ausgebildet ist und mit dem Filtergehäuse, das einen Filtermediumkörper zur Filtration des Fluids aufnimmt, verbunden ist. Die Verbindung ist in einer lösbaren Weise ausgeführt, so dass das Heizmodul am Filtergehäuse befestigt und auch wieder vom Filtergehäuse gelöst werden kann.

Das Heizmodul liegt flächig am Filtergehäuse an, wobei die Kontaktfläche zwischen Heizmodul und Filtergehäuse weitgehend oder vollständig in sich eben ausgebildet ist. Diese Ausführung hat den Vorteil, dass sich über die flächige Anlage Spannkräfte zwischen dem Heizmodul und dem Filtergehäuse über die verhältnismäßig große Kontaktfläche verteilen und Kraftspitzen in der Kontaktfläche vermieden werden. Die große Kontaktfläche ermöglicht zudem eine strömungsdichte Anbindung des Heizmoduls an das Filtergehäuse ohne Notwendigkeit eines axialen Eingriffs eines Stutzens am Heizmodul oder am Filtergehäuse in eine korrespondierende Ausnehmung im jeweils anderen Bauteil.

Die in sich ebene Kontaktfläche umfasst sowohl Ausführungen mit planaren, in einer Ebene liegenden Kontaktflächen als auch Ausführungen mit dreidimensional gekrümmten, jedoch glattflächigen Kontaktflächen wie z.B. konusförmigen Kontaktflächen oder konkav oder konvex gewölbten Kontaktflächen. In jedem Fall wird eine flächige Anlage ohne zusätzliche Bauteile zwischen den Heizmodulen und dem Filtergehäuse erreicht.

Das Heizmodul ist über einen Spannverschluss am Filtergehäuse gehalten. Der Spannverschluss übt auf das Heizmodul und das Filtergehäuse eine Spannkraft aus, die achsparallel zur Filterlängsachse gerichtet ist. Im Falle eines ringförmigen bzw. hohlzylindrischen Filtermediumkörpers, an dem die Filtration stattfindet, stellt die Filterlängsachse die Ring- bzw. Zylinderachse des Filtermediumkörpers dar, die zugleich die Längsachse des Filtergehäuses und der Filtereinrichtung ist. Der Spannverschluss ermöglicht durch seine mechanische Selbsthemmung in der Spannstellung eine vor ungewolltem Öffnen konstruktiv einfache Verbindung, wobei die hohe Endübersetzung des Spannverschlusses nach dem Kniehebelprinzip bei geringem Kraftaufwand und ohne zusätzliche Haltemittel große Spannkräfte ermöglicht. Der Spannverschluss lässt sich jedoch trotz hoher darauf einwirkender Kräfte und einer hohen Festigkeit der Verbindung zu Wartung und Austausch einfach befestigen und lösen, ohne weitere Werkzeuge zu erfordern und ist somit auch leicht in der Handhabung.

Der Spannverschluss drückt das Heizmodul und das Filtergehäuse im Bereich ihrer Kontaktfläche axial gegeneinander, wobei sich die Spannkraft auf die Kontaktfläche verteilt und sich aufgrund der großen Kontaktfläche ein verhältnismäßig geringer Spanndruck zwischen den Bauteilen ergibt. In Kombination mit der in sich ebenen Kontaktfläche mit der axialen Spannkraft wird unter Vermeidung von lokalen Kraftspitzen hohe Dichtigkeit erreicht.

Erfindungsgemäß erstreckt sich die Kontaktfläche annähernd oder vollständig über die gesamte Querschnittsfläche des Filtergehäuses, so dass die axiale Spannkraft über eine entsprechend große Fläche verteilt aufgenommen wird.

Die Kontaktfläche wird auf Seiten des Filtergehäuses insbesondere von einer Stirnseite des hohlzylindrischen Filtergehäuses gebildet. Das Heizmodul kann im Hinblick auf seinen Außendurchmesser an den Außendurchmesser des Filtergehäuses angepasst sein und zumindest annähernd den gleichen Außendurchmesser wie das Filtergehäuse aufweisen. Das Heizmodul liegt an einer axialen Stirnseite des Filtergehäuses.

Gemäß noch einer weiteren vorteilhaften Ausführung sind sowohl in das Heizmodul als auch in das Filtergehäuse im Bereich der Kontaktfläche jeweils Strömungsöffnungen eingebracht, über die das Fluid vom Heizmodul zur Rohseite im Filtergehäuse überströmen kann. Die Strömungsöffnungen liegen aufeinander und fluchten. In weiteren Ausführungsformen kommt auch ein axial überragender Stutzen entweder an der Außenseite des Heizmoduls oder an der Außenseite des Filtergehäuses in Betracht, der in eine Strömungsöffnung am jeweils anderen Bauteil hineinragt. In bevorzugter Ausführung wird aber auf einen derartigen Stutzen verzichtet, so dass lediglich die Strömungsöffnungen aneinander bzw. aufeinander liegen und den Übertritt des Fluids vom Heizmodul zum Filtergehäuse ermöglichen.

Die Strömungsöffnungen sind vorteilhafterweise zentrisch in das Heizmodul und in das Filtergehäuse eingebracht. Dementsprechend befinden sich die Strömungsöffnungen koaxial im Heizmodul und im Filtergehäuse. Im Fall einer konusförmigen Ausführung der Kontaktfläche befindet sich die Strömungsöffnung am Heizmodul sowie am Filtergehäuse im Bereich der Spitze der Konusform.

Alternativ zu einer dreidimensional geformten Kontaktfläche wie beispielsweise Konusform oder einer konvexen oder konkaven Wölbung kommt auch eine ebene, plane Ausführung beispielsweise in Form einer Scheibe in Betracht.

Gemäß einer weiteren vorteilhaften Ausführung ist der Spannverschluss als Spannbügel oder Kniehebelverschluss ausgebildet. Gemäß einer bevorzugten Ausführung umfasst der Spannverschluss sowohl einen Spannbügel als auch einen Kniehebelverschluss, wobei der Kniehebelverschluss von dem Spannbügel zum Schließen und zum Öffnen über einen Totpunkt hinweg verstellt wird. Die Schließposition stellt eine stabile Position dar, die ohne weitere Sicherungselemente von dem Spannverschluss dauerhaft beibehalten wird.

Gemäß noch einer weiteren zweckmäßigen Ausführung ist der Spannverschluss am Heizmodul befestigt. Mit dem Aufsetzen des Heizmoduls auf das Filtergehäuse kann der Spannverschluss in eine ein Befestigungselement am Filtergehäuse umgreifende Position gebracht werden. Das Befestigungselement befindet sich insbesondere an der Außenwand des Filtergehäuses. Nach dem Umgreifen des Befestigungselements kann der Spannverschluss gespannt und in die Schließposition überführt werden kann. Der Spannverschluss gewährleistet die gewünschte axiale Spannkraft zwischen dem Filtergehäuse und dem Heizmodul.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt längs durch eine Filtereinrichtung mit stirnseitig aufgesetztem Heiz-modul, wobei die Kontaktfläche zwischen einem Filtergehäuse der Filtereinrich-tung und dem Heizmodul flächig und in sich eben ausgebildet und das Heizmo-dul über einen Spannverschluss am Filtergehäuse gehalten ist,
- Fig. 2: die Filtereinrichtung einschließlich Heizmodul mit dem Spannverschluss in Längsposition,
- Fig. 3: eine Fig. 2 entsprechende Darstellung, jedoch mit dem Spannverschluss in geöffneter Position.

In den Figuren sind gleiche Bauteile mit gleichen Bezugszeichen versehen.

### Ausführungsform(en) der Erfindung

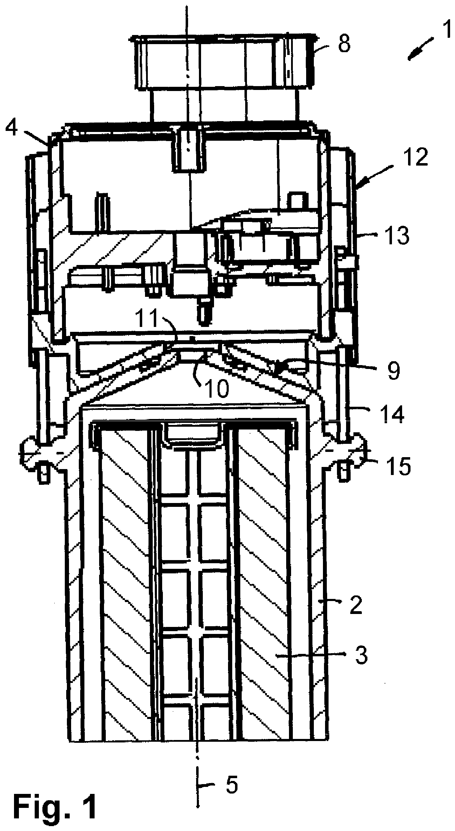

Die in Fig. 1 bis 3 dargestellte Filtereinrichtung 1 wird zur Kraftstofffiltration in Fahrzeugen mit Brennkraftmaschine eingesetzt, insbesondere zur Filtration von Dieselkraftstoff. Die Filtereinrichtung 1 weist ein Filtergehäuse 2 auf, in dem ein Filtermediumkörper in Form eines hohlzylindrischen bzw. ringförmigen Filterelementes 3 aufgenommen ist, das von dem zu reinigenden Fluid radial von außen nach innen - bezogen auf die Filterlängsachse 5 - durchströmt wird. Dementsprechend bildet die außen liegende Mantelfläche des Filterelementes 3 die Rohseite und der hohlzylindrische Innenraum im Filterelement 3 die Reinseite, aus dem das gereinigte Fluid axial nach unten abgeleitet wird.

Die Filtereinrichtung 1 ist mit einem Heizmodul 4 versehen, das separat von dem Filtergehäuse 2 ausgebildet, jedoch mit diesem lösbar zu verbinden ist. Das Heizmodul 4 befindet sich an der axialen Stirnseite des Filtergehäuses 2 und weist einen Einströmstutzen 6 auf, über den das ungereinigte Fluid in die Filtereinrichtung 1 eingeführt wird. Das Fluid durchströmt das Heizmodul 4 axial, wird ggf. im Heizmodul 4 erwärmt, strömt vom Heizmodul 4 in den Innenraum des Filtergehäuses 2, durchströmt das Filterelement 3 radial von außen nach innen und wird schließlich axial über die dem Heizmodul 4 gegenüberliegende Stirnseite über einen Abströmstutzen 7 aus der Filtereinrichtung 1 abgeleitet. Der Einströmstutzen 6 am Heizmodul 4 und der axial gegenüberliegende Abströmstutzen 7 an der Stirnseite des Filtergehäuses 2 verlaufen jeweils achsparallel.

Am Heizmodul 4 befindet sich auf der gleichen Seite wie der Einströmstutzen 6 ein Anschluss 8 zum Anschließen elektrischer Verbindungskabel für ein Heizelement im Heizmodul 4 und ggf. auch ein Sensor im Heizmodul 4 zur Ermittlung der Fluidtemperatur.

Das Heizmodul 4, das separat von dem Filtergehäuse 2 ausgebildet ist, ist an eine Stirnseite des Filtergehäuses 2 aufgesetzt. Im Kontaktbereich zwischen Heizmodul 4 und Filtergehäuse 2 befindet sich eine Kontaktfläche 9, die konusförmig ausgebildet ist. Die Kontaktfläche 9 wird durch eine entsprechende konusförmige Gestalt sowohl der Stirnseite des Filtergehäuses 2 als auch des Heizmoduls 4 an der Kontaktfläche gebildet. Heizmodul 4 und Filtergehäuse 2 liegen im Bereich der konusförmigen Kontaktfläche 9 flächig aneinander, wobei sich die Kontaktfläche 9 über die gesamte Stirnseite des Filtergehäuses 2 erstreckt. Die Kontaktfläche 9 ist in sich eben ausgebildet und weist keine über die Konusform hinausragende Erhebungen oder Vertiefungen auf. Dementsprechend ist eine glattflächige Kontaktfläche 9 gebildet, entlang der das Filtergehäuse 2 und die zugewandte Seite des Heizmoduls 4 flächig aneinander liegen. Diese flächige Anlage hat den Vorteil, dass eine strömungsdichte Verbindung zwischen Heizmodul 4 und Filtergehäuse 2 gegeben ist und außerdem lokale Kraftspitzen in der Kontaktfläche 9 vermieden werden. Zudem lässt sich die glattflächige Kontur leichter herstellen, beispielsweise im Wege des Kunststoff-Spritzgießverfahrens.

Die konusförmige Kontaktfläche 9 ist aus Sicht des Filtergehäuses 2 nach außen gewölbt und aus Sicht des Heizmoduls 4 nach innen gewölbt. In der Spitze der Konusform befindet sich jeweils eine Strömungsöffnung 10 bzw. 11 im Filtergehäuse 2 bzw. dem Heizmodul 4, über die der Kraftstoff, der über den Einströmstutzen 6 in das Heizmodul 4 geleitet wird, weiter vom Heizmodul 4 zum Innenraum im Filtergehäuse 2 strömen kann. Die Strömungsöffnungen 10 und 11 liegen unmittelbar aufeinander, sie fluchten und liegen koaxial zur Längsachse 5.

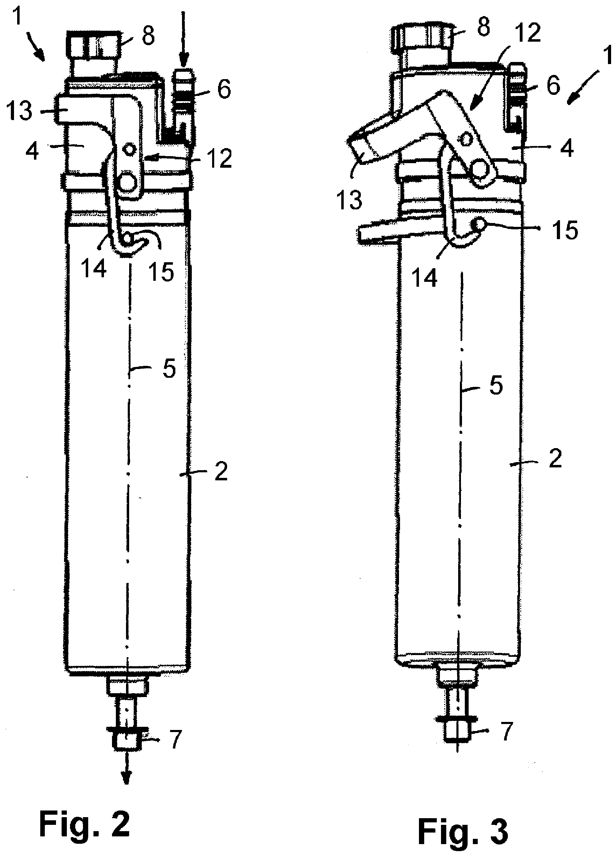

An der Außenseite des Heizmoduls 4 ist ein Spannverschluss 12 befestigt, mit dem das Heizmodul 4 an der Stirnseite des Filtergehäuses 2 befestigt werden kann und über den eine axiale Spannkraft erzeugbar ist, welche das Heizmodul 4 am Filtergehäuse 2 sichert und gegen das Filtergehäuse 2 presst. Der Spannverschluss 12 umfasst einen Spannbügel 13, der an der Außenseite des Heizmoduls 4 schwenkbar befestigt ist, und einen Kniehebelverschluss 14, der gelenkig an dem Spannbügel 13 gehalten ist und in der Schließposition einen radial nach außen ragenden Befestigungszapfen 15 am Filtergehäuse 2 hintergreift. In Fig. 2 ist der Spannverschluss 12 in der Schließposition, in Fig. 3 in der Öffnungsposition dargestellt. In der Schließposition nimmt der Kniehebelverschluss 14 eine Übertotpunktlage ein, so dass die Schließposition von dem Spannverschluss 12 ohne weitere Sicherungselemente dauerhaft beibehalten wird. Die axial von dem Spannverschluss 12 ausgeübte Spannkraft wirkt zwischen dem Kniehebelverschluss 14 und den seitlich angeordneten Befestigungszapfen 15 und wird über die Kontaktfläche 9 zwischen dem Filtergehäuse 2 und dem Heizmodul 4 übertragen. In Verbindung mit der flächigen Anlage von Filtergehäuse 2 und Heizmodul 4 im Bereich der Kontaktfläche 9 wird hierdurch eine sichere, insbesondere strömungsdichte Verbindung zwischen dem Heizmodul 4 und dem Filtergehäuse 2 geschaffen.

## Patentansprüche

1. Filtereinrichtung, insbesondere zur Kraftstofffiltration, mit einem Heizmodul (4), das an ein Filtergehäuse (2) mit einem darin aufgenommenen Filtermediumkörper angeschlossen ist, wobei das Heizmodul (4) flächig am Filtergehäuse (2) anliegt, **dadurch gekennzeichnet, dass** das Heizmodul (4) über eine in sich ebene Kontaktfläche (9) am Filtergehäuse (2) anliegt, welche sich über zumindest annähernd die gesamte Querschnittsfläche des Filtergehäuses (2) erstreckt, und dass das Heizmodul (4) über einen Spannverschluss (12) am Filtergehäuse (2) gehalten ist, wobei der Spannverschluss (12) eine achsparallel zur Filterlängsachse (5) gerichtete Spannkraft auf das Filtergehäuse (2) und das Heizmodul (4) ausübt, welche über die Kontaktfläche (9) übertragen wird.

2. Filtereinrichtung nach Anspruch 1, **dadurch gekennzeichnet, dass** die Kontaktfläche (9) konusförmig ausgebildet ist.

3. Filtereinrichtung nach Anspruch 1 oder 2, **dadurch gekennzeichnet, dass** in das Heizmodul (4) und in das Filtergehäuse (2) im Bereich der Kontaktfläche (9) aufeinander liegende Strömungsöffnungen (10, 11) für das zu heizende und zu reinigende Fluid eingebracht sind.

4. Filtereinrichtung nach Anspruch 3, **dadurch gekennzeichnet, dass** die Strömungsöffnungen (10, 11) zentrisch in das Heizmodul (4) und das Filtergehäuse (2) eingebracht sind.

5. Filtereinrichtung nach einem der Ansprüche 1 bis 4, **dadurch gekennzeichnet, dass** das Heizmodul (4) und das Filtergehäuse (2) im Bereich der Kontaktfläche (9) konusförmig ausgebildet sind.

6. Filtereinrichtung nach Anspruch 5, **dadurch gekennzeichnet, dass** das Filtergehäuse (2) im Bereich der Kontaktfläche (9) konusförmig nach außen gewölbt ist.

7. Filtereinrichtung nach einem der Ansprüche 1 bis 6, **dadurch gekennzeichnet, dass** der Spannverschluss (12) als Spannbügel (13) und/oder Kniehebelverschluss (14) ausgebildet ist.

8. Filtereinrichtung nach einem der Ansprüche 1 bis 7, **dadurch gekennzeichnet, dass** der Spannverschluss (12) am Heizmodul (4) befestigt ist.

9. Filtereinrichtung nach einem der Ansprüche 1 bis 8, **dadurch gekennzeichnet, dass** der Filtermediumkörper als ringförmiges Filterelement (3) ausgebildet und bezogen auf die Filterlängsachse (5) in Radialrichtung durchströmbar ist.

## Claims

1. Filtering device, in particular for fuel filtration, having a heating module (4) connected to a filter housing (2) with a filter medium body accommodated therein, wherein the heating module (4) abuts the filter housing (2) in a flat manner, **characterized in that** the heating module (4) abuts the filter housing (2) via an inherently flat contact surface (9), which extends at least approximately across the complete cross-sectional area of the filter housing (2), and that the heating module (4) is held on the filter housing (2) by a clamping fastener (12), wherein the clamping fastener (12) exerts a clamping force directed axially parallel to the longitudinal axis of the filter (5) on the filter housing (2) and the heating module (4), which clamping force is applied via the contact surface (9).

2. Filtering device according to claim 1, **characterized in that** the contact surface (9) is conical shaped.

3. Filtering device according to claim 1 or 2, **characterized in that** in the area of the contact surface (9) flow openings (10, 11) lying one above the other are introduced into the heating module (4) and the filter housing (2) for the fluid to be heated and to be cleaned.

4. Filtering device according to claim 3, **characterized in that** the flow openings (10, 11) are introduced centrally into the heating module (4) and the filter housing (2).

5. Filtering device according to one of the claims 1 to 4, **characterized in that** the heating module (4) and the filter housing (2) are conically shaped in the area of the contact surface (9).

6. Filtering device according to claim 5, **characterized in that** in the area of the contact surface (9) the filter housing (2) is curved outwardly in a conical shape.

7. Filtering device according to one of the claims 1 to 6, **characterized in that** the clamping fastener (12) is realized as clamping bracket (13) and/or as toggle latch (14).

8. Filtering device according to one of the claims 1 to 7, **characterized in that** the clamping fastener (12) is attached to the heating module (4).

9. Filtering device according to one of the claims 1 to 8, **characterized in that** the filter medium body is designed as an annular filter element (3) and can be flowed through in the radial direction with regard to the longitudinal axis of the filter (5).

## Revendications

1. Dispositif de filtration, destiné notamment à la filtration de carburant, ayant un module de chauffage (4) connecté à un boîtier de filtre (2) avec un corps de milieu filtrant qui y est logé, dans lequel le module de chauffage (4) repose à plat sur le boîtier de filtre (2), **caractérisé en ce que** le module de chauffage (4) est en contact avec le boîtier de filtre (2) par l'intermédiaire d'une surface de contact (9) qui est plane en soi et s'étend, au moins approximativement, sur toute la surface de section transversale du boîtier de filtre (2), et que le module de chauffage (4) est maintenu sur le boîtier de filtre (2) via un fermoir à serrage (12), dans lequel le fermoir à serrage (12) exerce sur le boîtier de filtre (2) et le module de chauffage (4) une force de serrage dirigée parallèlement à l'axe longitudinal du filtre (5), laquelle force de serrage est transmise par la surface de contact (9).

2. Dispositif de filtration selon la revendication 1, **caractérisé en ce que** la surface de contact (9) est réalisée sous forme de cône.

3. Dispositif de filtration selon la revendication 1 ou 2, **caractérisé en ce que** dans la zone de la surface de contact (9) des ouvertures d'écoulement superposées (10, 11) pour le fluide à chauffer et à nettoyer sont introduites dans le module de chauffage (4) et le boîtier de filtre (2).

4. Dispositif de filtration selon la revendication 3, **caractérisé en ce que** les ouvertures d'écoulement (10, 11) sont introduites de manière centrée dans le module de chauffage (4) et le boîtier de filtre (2).

5. Dispositif de filtration selon une quelconque des revendications 1 à 4, **caractérisé en ce que** le module de chauffage (4) et le boîtier de filtre (2) sont réalisés sous forme de cône dans la zone de la surface de contact (9).

6. Dispositif de filtration selon la revendication 5, **caractérisé en ce que** dans la zone de la surface de contact (9) le boîtier de filtre (2) est bombé vers l'extérieur sous forme de cône.

7. Dispositif de filtration selon une quelconque des revendications 1 à 6, **caractérisé en ce que** le fermoir à serrage (12) est réalisé en tant qu'étrier de fixation (13) et/ou fermeture à genouillère (14).

8. Dispositif de filtration selon une quelconque des revendications 1 à 7, **caractérisé en ce que** le fermoir à serrage (12) est attaché au module de chauffage (4).

9. Dispositif de filtration selon une quelconque des revendications 1 à 8, **caractérisé en ce que** le corps de milieu filtrant est réalisé sous forme d'un élément filtrant annulaire (3) et peut être parcouru en direction radiale par rapport à l'axe longitudinal du filtre (5).
